# EUROPEAN PATENT APPLICATION

(11) **EP 4 685 334 A1**
(43) Date of publication of application: **28.01.2026**
(21) Application number: 23927862.5
(22) Date of filing: 20.03.2023
(51) Int. Cl.: E21D 9/00, E21B 7/00, E21C 41/00, G01C 7/00, G01S 17/00, G01S 17/89, G01S 17/894

(54) **AUTOMATED METHOD AND SYSTEM FOR SCANNING, DETECTING AND EXAMINING PERFORATIONS IN A ROCK FACE**

(71) Applicant: Enaex Servicios S.A., Las Condes, Santiago (CL)
(72) Inventor: PARRA TSUNEKAWA, Sebastian Isao, Santiago (CL); RUIZ DEL SOLAR SAN MARTIN, Javier, Santiago (CL); LONCOMILLA ZAMBRANA, Patricio Alejandro, Santiago (CL); CALVO SANCHEZ, Martin Eduardo, Santiago (CL); CORREA PEREZ, Mauricio Alfredo, Santiago (CL); RUIZ HERNÁNDEZ, Marco Antonio, Santiago (CL); BARRIGA MELGAREJO, Jonhatan Octavio, Santiago (CL); MIRANDA LORCA, Rodrigo Andrés, Valparaíso (CL); LARA MARRO, Gloria del Pilar, Santiago (CL)
(74) Representative: Daub, Thomas
(86) International application number: PCT/CL2023/050023
(87) International publication number: WO 2024/192538

(57) **Abstract**

The present invention relates to an automated method and system for detecting perforations in a rock face that detects perforations in a perforated face in order to position instruments relative to each hole. The method uses a record of light detection and ranging (LiDAR) sensor scans as information, as well as a time-of-flight (ToF) camera. The method requires complementing and comparing a set of perforation candidates obtained from scans with the information from a perforation plan executed on the rock face in order to define a set of perforations.

## Description

### FIELD OF INVENTION

The present invention relates to the mining and construction industry. In particular, the present invention relates to a system and method for scanning, detecting and examining blast- and drill holes in a rock face.

### STATE OF THE ART

Currently in the mining and construction industry, new alternatives are being sought so as to automate the processes associated with the detection of drilled blastholes in a rock face, in order to facilitate the tasks associated with the autonomous or semi-autonomous loading of explosives and in the state-of-the-art various solutions have been found, which partially solve the technical problem posed.

Within the state-of-the art is US patent 10,724,371 B2, which discloses a method consisting of obtaining with a robot camera system one image representation of a mining wall having drill holes. A drilling map characterizing the mining wall is compared to the image representation to perform the identification of the drill holes of the map not detected in the image representation. The operation is activated in a robot system based on an input from an operator in response to the identification of the drill hole of the map not detected in the image representation, where the image data of the image representation is designated as representative of the drill hole. However, the cited document only refers to the distance detection of the drill holes and does not consider the examination of the detected drill holes, considering that these blast holes can actually collapse internally due to rock-mechanical reasons or can have serious deviations in the direction thereof, which makes the calculation of the amount of explosive to be loaded more complex.

Another prior-art document corresponds to publication WO2020028951 A1, which describes a blast hole measurement and logging apparatus comprising a housing configured to operatively house a solid-state **LiDAR** sensor set configured to transmit and steer pulses of light into a blast hole by shifting a phase of said pulses through the set to compile volumetric data of said sensor' s field-of-view. Also, a processor is comprised, which is configured to receive the volumetric data from the LiDAR sensor, and said volumetric data indicates an internal volume of said blast hole useable in calculating an explosive charge according to a blast plan, being the processor configured to store and/or transmit the volumetric data. Nevertheless, the cited document involves the use of satellite data to identify the holes, which is useful for open-pit mining, but not in underground mining, as highlighted in the present disclosure. Furthermore, the volumetric data is obtained from the outside with images, which can lead to errors given the reliefs that the holes can have.

Another prior-art document corresponds to US patent 11,055,546 B2, which describes an apparatus for sign detection that includes a point cloud analysis module, an image analysis module, a frustum comparison module, and a sign detector. The point cloud analysis module is configured to receive point cloud data associated with a geographic region and classify at least one point neighborhood in the point cloud data as planar and a sign position candidate. The image analysis module is configured to receive image data associated with the geographic region and calculate a sighting frustum from the image data and said frustum comparison module is configured to perform a comparison of the sighting frustum to the sign position candidate, which has at least one point neighborhood classified as planar. The sign detector is configured to provide a location for the sign detection in response to the comparison of the sighting frustum to the sign position candidate. However, the cited document is directed to the detection of flat or 2D figures in a 3D environment, whereas the sensors move, calculating the geometry of the frustum that these 2D figures form in the light of the geographic location.

### BRIEF DESCRIPTION OF THE INVENTION

The present invention is related to an automated method for detecting blastholes, which allows detecting blastholes in a drilled front so as to position instruments in front of each blasthole. The method uses as information a record of scans from light detection and ranging (LiDAR) sensors - preferably 2D LiDAR sensors, which measure the distance by using a laser mounted on a motor and additionally employing a time-of-flight (ToF) camera for phase detection. The method requires supplementing the information by means of a spatial description of positions (x, y, z) of blast- or drill holes involving a drilling plan executed in the rock face.

The LiDAR sensor mounted on a motor allows the density of scanning points to be adjusted by regulating the rotation speed of the motor that rotates the LiDAR sensor. Thus, a higher rotation speed can be used to perform a coarse scan, while slower rotation speeds are preferred if higher resolution and greater point density are required.

### DESCRIPTION OF FIGURES

Figure 1 shows a schematic representation of imaging a rock face having drill holes by means of a visible spectrum camera.
Figure 2 shows a schematic representation of the coarse scanning of a rock face having drill holes by means of LiDAR sensors.
Figure 3 shows a schematic representation of fine scanning of a rock face having drill holes by means of LiDAR sensors.
Figure 4 shows a schematic representation of the extra-fine scanning of a drill hole at a rock face using a ToF camera.
Figure 5 shows a schematic representation of the recording of the depth and internal geometry of a drill hole at a rock face by introducing a sensorized probe.

### DETAILED DESCRIPTION OF THE INVENTION

The main objective of the drilling detection and evaluation system is to find the blastholes within the horizontal working front, associate them with the corresponding drill according to the drilling diagram, and evaluate the blasthole deviation from the design requirements. To do this, the system relies on detections based on a three-dimensional reconstruction of the front using the 2D laser scanner and a sensor that enters into the drill holes to determine the internal geometry thereof. The following steps are taken to conduct the method.

Using a set of LiDAR sensors, the rock face is scanned, performing a coarse scan and a fine scan, thus obtaining a point cloud of the rock face.

The point cloud information is analyzed and processed so as to define the set of candidates to be drilled, where a contiguity analysis of the points in the fine scan point cloud is performed, then the sets of points with the greatest separation from the contiguous points are grouped, and a representative center point is defined for each grouping of sets of points with a greater separation, so as to define each representative center point as a candidate to be drilled. The set of candidates to be drilled is compared to the drilling plan executed on the rock face in order to define the set of drill holes and the orientation thereof.

In this way, by comparing the candidates to be drilled detected by fine scanning with the drilling diagram or plan executed in the rock face, these candidates to be drilled are confirmed as drill holes in the rock face. The drilling plan executed in the rock face allows distinguishing the approximate relative position between the drill holes; however, before the scanning process is performed, the spatial position thereof in the rock face is unknown.

In order to compare the candidates to be drilled detected by fine scanning with the drilling diagram or plan executed in the rock face, a fitting process is performed within the executed drilling plan. Each drilling candidate is evaluated as a drill hole within the executed drilling plan, and the number of fits of the other candidates to be drilled is evaluated. Then, the rotation on the normal axis of the executed drilling plan is iteratively adjusted to try to improve the fits on that translation point. This is evaluated for all candidates to be drilled, and the translation that obtains the highest score in this evaluation is chosen, i.e., different possible positions and angles are evaluated, and the one that best fits the executed drilling plan is chosen.

An alternative manner of embracing the comparison of candidates to be drilled detected by fine scanning with the drilling diagram or plan executed in the rock face is the fact of considering that all points in the point cloud are calculated to have a certain number of neighbors within a certain neighborhood or spherical volume. Drill holes tend to have fewer neighbors as there is greater separation between the points in the cloud.

It should be noted that the points of the rock face that are furthest from the LiDAR sensor have comparatively fewer neighbors within a certain vicinity than those points of the rock face that are closer to the LiDAR sensor. Therefore, in order to perform the analysis, the evaluation of the vicinity of points is adjusted in the light of the distance of the point.

When there is a drill hole in the drilling plan executed on the rock face that has not been detected and is not included in the set of candidate to be drilled, said drill hole is added to the set of drill holes in the spatial position that it should geometrically occupy based on its relative distance from the other drill holes in the set of drill holes.

Using robotic means, a ToF camera is set close to a drill hole of the set of drill holes, thus taking records of the individual drill holes or blast holes, and this information is used to determine a relative misalignment between the ToF camera and the drill hole. The position of the ToF camera is then adjusted by robotic means so as to align the ToF camera with the drill hole based on the information of the relative misalignment between the ToF camera and the drill hole, thereby allowing additional instrumentation to be located in front of each drill hole.

A sensorized probe is inserted into the individual drill holes using a transfer medium, which may be, for example, a hose. However, other elements that are substantially flexible, transversely but considerably more rigid longitudinally are also suitable for inserting the probe into the individual drill holes, such as elongated cylindrical bodies, flexible rods or retractable antennas. The probe has, for example, an inertial sensor on the inside, which provides the changes in direction and acceleration experienced by the probe. This information is supplemented by the forward distance traveled by the probe to obtain, for example, the path inside the drill hole, the internal geometry, the direction of the drill hole and/or the depth of each drill- or blast hole.

By integrating the laser scanner with a servomotor, an environment scanning function is performed, which allows the three-dimensional reconstruction of the working face in order to establish, for example, the relative distance of the walls and the drilled rock face. Accordingly, it is possible to establish an operating volume so that the robotic equipment can move without colliding with the walls of the rock tunnel where it is working or with other equipment that may be in the same working area.

Coarse scanning is performed using a laser scan of the LiDAR sensor set, which is positioned at an initial distance of about 6 and 15 meters from the rock face, preferably at a distance of about 8 and 12 meters. Coarse scanning allows modelling the immediate environment, thus defining the surface that comprises the drilled face, locate it spatially, and differentiate it from the walls, ceiling, and floor. This process makes it possible to determine the actual dimensions of the drilled face, avoiding the risk of assuming a predefined dimension and leaving drill holes out of the analysis. Coarse scanning can be performed even if the LiDAR sensor set consists of a single LiDAR sensor.

Fine scanning is performed using a LiDAR sensor from the LiDAR sensor set positioned at a second distance of about 8 and 12 meters from the rock face, preferably at a distance of about 3 and 5 meters. The LiDAR sensor performs a vertical laser scan while a rotation medium rotates it horizontally, allowing a three-dimensional image of the entire drilled wall to be obtained. Likewise, the laser scan can be performed horizontally with a rotation medium that rotates horizontally. In another embodiment of the present technology, the front LiDAR sensor performs a horizontal laser scan while a rotating medium rotates it vertically. The rotating medium can be, for example, a servomotor that rotates the front LiDAR sensor. Depending on the size of the face and the technical capabilities of the LiDAR sensor itself, this process can be divided into two or more stages by scanning the rock face in subsections. Fine scanning allows obtaining detailed information on the number of drill holes in the rock face - details that coarse scanning cannot necessarily obtain, and which allows the calculation of the relative positions of each of the drill holes with respect to the laser scanner or the means containing said laser scanner. Thus, it is possible to correlate the detected drill holes with the drilling diagram, which allows the elimination of drill holes debris or misfired blastholes from previous blasting processes that at first glance might appear to be a drill hole of the executed drilling plan, but they are in fact drill-holes debris too short to be a blasthole to the fired.

Finally, once the drill holes in the rock face have been confirmed, an approach and centering process is conducted for each of the drill holes using a ToF camera. To perform this approach and centering process, the ToF camera is positioned in front of each of the possible drill holes and it scans at a distance of about 5 cm and 50 cm from the rock face, more preferably at a distance of about 10 cm and 30 cm from the rock face, after the positioning equipment is positioned in front of the wall. The approach and centering process allows the position of a probe to be corrected and adjusted before the same is inserted into a drill hole, so that the probe can enter the drill holes easily.

This technology further incorporates an internal exploration system that inserts a probe with sensors into each of the drill holes, allowing for example the record of the internal geometry, drilling direction, and/or depth of each drill hole.
An internal map of the drill holes is then created by combining the information obtained from the coarse and fine scans with the information obtained from the internal drill-hole drilling exploration. The internal exploration of the drill holes provides data of significant importance for calculating the amount of explosives, such as the length, path, and volume of each drill hole. The internal volume is estimated by considering the forward distance traveled by the probe inside each drill hole and the drill hole diameter used for the drilling plan executed.

When the probe is inserted into the drill hole using a hose, said hose is inserted using a puller that also records the progress of the hose. When the tip of the hose reaches the end of the drill hole, an increase in the force exerted by the puller is detected.

The system and method for scanning, detecting, and examining blast- and drill holes at a rock face using the present technology identifies, compares, and correlates information coming from a drilling plan executed in the rock face and a set of drill-hole candidates scanned at a rock face after executing the drilling plan, where the depth of the blast holes is determined by the probe that enters and measures them. Thus, the system and method for scanning, detecting, and examining blast- and drill holes at a rock face using the present technology does not require geolocation and can operate even in underground environments without geolocation.

The present technology also allows the detection of potential blast holes using a visible spectrum camera, taking color or black and white images of the rock face, which are then binarized so as to define a set of 2D candidates to be drilled in the rock face in the light of the binarized images. The set of 2D candidates to be drilled is compared to the executed drilling plan, eliminating from the set of 2D candidates to be drilled those candidates to be drilled that - due to their relative distance from other candidates to be drilled, do not correlate with any drill hole within the executed drilling plan.

The definition of the set of 2D candidates to be drilled in the rock face in the light of the binarized images is determined by the following steps: binarizing by means of a threshold based on the midpoint of the image histogram; performing morphological closing operations to eliminate scattered points remaining in the image; applying a circularity filter to generate sets of pixels to be analyzed; applying a center-contour test to find centers that meet the condition of being possible drill holes.

On the other hand, it has been observed that state-of-the-art solutions severely reduce their effectiveness on detecting blast holes that are radially further away from the cameras and light sources, due to the fact that as the blast holes move further away radially, they appear distorted and oval-shaped. To overcome this difficulty, the present method for detecting bore holes incorporates a correction in the evaluation of candidates based on their relative position with respect to the cameras.

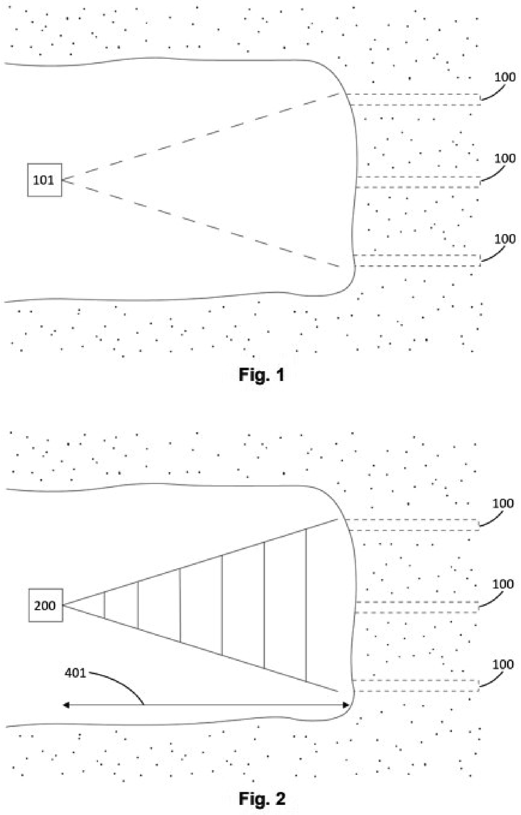

Figure 1 shows a schematic representation of the image capture of a rock face with drill holes 100 using a visible spectrum camera 101. The images are recorded in color or black and white and then binarized in order to detect possible blast holes by identifying darker tones within the color spectrum or grayscale, as appropriate.

Figure 2 shows a schematic representation of coarse scanning of a rock face with drill holes 100 using a set of LiDAR sensors 200 that scan the rock face at a first distance 401 from the rock face.

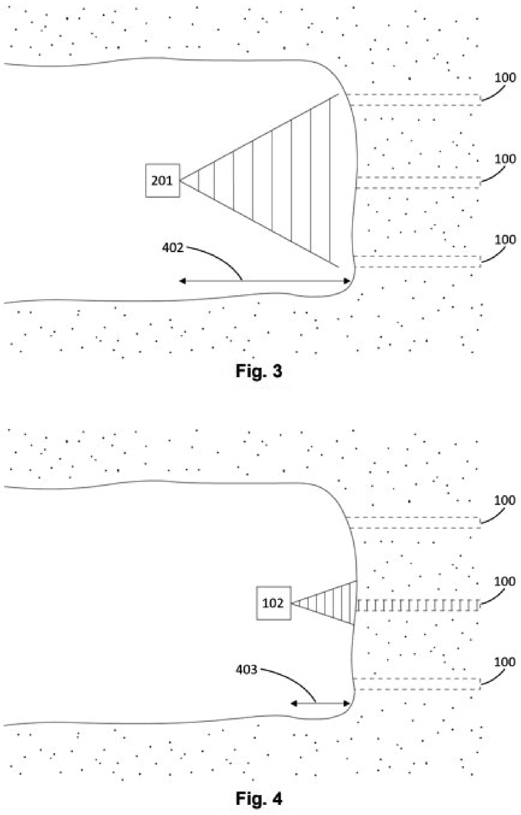

Figure 3 shows a schematic representation of the fine scanning of a rock face with drill holes 100 using a front LiDAR sensor 201 positioned at a second distance 402 from the rock face.

Figure 4 shows a schematic representation of the extra-fine scanning of a drill hole 100 at a rock face using a ToF camera 102, where the ToF camera 102 is positioned at a third distance 403 from the rock face.

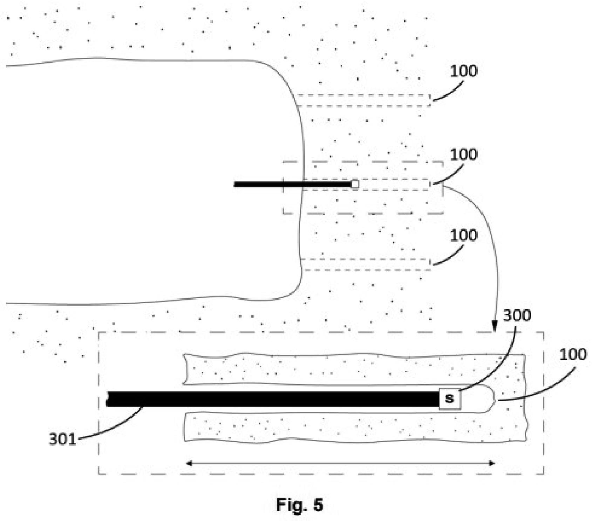

Figure 5 shows a schematic representation of the recording of the depth and internal geometry of a drill hole 100 at a rock face by inserting a sensorized probe 300, where the probe is inserted through a hose 301.

The exemplary embodiments are described in detail hereunder to illustrate the principles of the invention. The embodiments are provided to illustrate aspects of the invention, but the invention is not limited to any embodiment. The scope of the invention encompasses numerous alternatives, modifications, and equivalents, limited only by the embodiments of the claims.

In a first embodiment, the present technology relates to an automated method for detecting drill holes in a rock face comprising the steps of: scanning the rock face at a first distance with a first scan density using a set of LiDAR sensors with at least one LiDAR sensor to obtain a coarse scan point cloud; setting the dimensions and relative position of the rock face from the information in the coarse scan point cloud; scanning the rock face at a second scan density using the set of LiDAR sensors to obtain a fine scan point cloud; wherein the second scanning density is greater than or equal to the first scanning density; defining a set of candidates to be drilled in the rock face based on the information from the fine scan point cloud; comparing the set of candidates to be drilled to a drilling plan executed on the rock face to define a set of drill holes.

The method further comprises the steps of: moving a ToF camera by robotic means toward a drill hole in the set of drill holes; scanning the rock face around the drill hole with the ToF camera to determine a relative misalignment between the ToF camera and the drill hole; adjusting the position of the ToF camera by robotic means to align the ToF camera with the drill hole based on the information of the relative misalignment between the ToF camera and the drill hole; and inserting into each drill hole a probe with sensors aligned with the ToF camera to record the internal geometry, drill hole direction, and/or depth of each drill hole. An additional technical advantage of inserting a probe is that it allows the determination of the internal condition of the drill hole in real time. When the inserted probe carries a wired IMU and advance information is obtained from the reel, the information from inside the drill hole can be processed immediately.

In another embodiment of the present technology, the step of defining the set of candidates to be drilled comprises performing a contiguity analysis of the points in the fine scan point cloud, grouping the sets of points with a greater separation from contiguous points, defining a representative center point for each grouping of point sets with a greater separation, and defining each representative center point as a candidate to be drilled.

In another embodiment of the present technology, the method further comprises removing from the set of candidates to be drilled those candidates to be drilled that - due to their relative distance from other candidates to be drilled, do not correlate with any drill hole within the executed drilling plan.

In another embodiment of the present technology, the method further comprises constructing a three-dimensional map of the rock face based on the coarse scan point cloud, the fine scan point cloud, and the set of drill holes.

In another embodiment of the present technology, the front LiDAR sensor performs a vertical laser scan while a rotation medium rotates it horizontally, or the front LiDAR sensor performs a horizontal laser scan while a rotation medium rotates it vertically.

In another embodiment, the present technology relates to an automated system for detecting drill holes in a rock face, comprising: a set of LiDAR sensors with at least one LiDAR sensor, wherein the set of LiDAR sensors scans the rock face at a first distance with a first scan density to obtain a coarse scan point cloud and wherein the set of LiDAR sensors scans the rock face with a second scan density greater than or equal to the first scan density to obtain a fine scan point cloud; at least one processor configured to define a set of candidates to be drilled in the rock face based on the information from the fine scan point cloud; wherein the processor compares the set of candidates to be drilled to a drilling plan executed on the rock face to define a set of drill holes.

In another embodiment of the present technology, the system further comprises a ToF camera mounted on robotic means and operatively connected to the processor, wherein the ToF camera scans the rock face around a drill hole and transmits the information so that the processor determines a relative misalignment between the ToF camera and the drill hole.

In another embodiment of the present technology, the system further comprises a sensorized probe aligned with the ToF camera that is inserted into each drill hole of the actual drill hole set to record the internal geometry, drill hole direction, and/or depth of each drill hole.

In another embodiment of the present technology, the system further comprises a visible spectrum camera for imaging the rock face, wherein the processor is further configured to binarize the rock face images and define a set of 2D candidates to be drilled on the rock face in the light of the binarized images.

### REFERENCE NUMBERS

In order to clarify the present description, a list of the components of the invention and their respective reference numbers in the figures is provided hereunder.
100 Drill hole
101 Visible spectrum camera
102 ToF Camera
200 LiDAR Sensor Set
201 Front LiDAR Sensor
300 Probe
301 Hose
401 First distance
402 Second distance
403 Third distance

Finally, it should be noted that various particular parameters of the invention, such as dimensions, choice of materials, and specific aspects of the preferred configurations described above may vary or be modified depending on operational requirements. Consequently, the specific configurations described above are not intended to be limiting, and such variations and/or modifications are within the spirit and scope of the invention.

## Claims

1. An automated method for detecting drill holes in a rock face comprising the steps of:
scanning the rock face at a first distance with a first scan density using a set of LiDAR sensors with at least one LiDAR sensor to obtain a coarse scan point cloud;
setting the dimensions and relative position of the rock face from the information of the coarse scan point cloud;
scanning the rock face at a second scan density using the set of LiDAR sensors to obtain a fine scan point cloud, wherein the second scan density is greater than or equal to the first scan density;
defining a set of candidates to be drilled in the rock face based on the information from the fine scan point cloud;
comparing the set of candidates to be drilled to a drilling plan executed on the rock face to define a set of drill holes.

2. The method according to claim 1, said method further comprises the steps of:
setting a ToF camera by robotic means close to a drill hole of the set of drill holes;
scanning the rock face around the drill hole with the ToF camera so as to determine a relative misalignment between the ToF camera and the drill hole;
adjusting the position of the ToF camera by robotic means to align said ToF camera with the drill hole in the light of the information of the relative misalignment between the ToF camera and the drill hole.

3. The method according to claim 2, said method further comprises introducing into each drill hole a probe with sensors aligned with the ToF camera in order to record the internal geometry, drilling direction and/or depth of each drill hole.

4. The method according to claim 1, wherein the step of defining the set of candidates to be drilled comprises performing a contiguity analysis of the points in the fine scan point cloud, grouping the sets of points with a greater separation from the contiguous points, defining a representative center point for each grouping of sets of points with a greater separation, and defining each representative center point as a candidate to be drilled.

5. The method according to claim 1, said method further comprises removing from the set of candidates to be drilled those candidates to be drilled that, due to their relative distance from other candidates to be drilled, do not correlate with any drilling within the executed drilling plan.

6. The method according to claim 1, said method further comprises constructing a three-dimensional map of the rock face based on the coarse scan point cloud, the fine scan point cloud, and the set of drill holes.

7. The method according to claim 1, wherein the LiDAR sensor performs a vertical laser scan while a rotation medium rotates it horizontally, or the LiDAR sensor performs a horizontal laser scan while a rotation medium rotates it vertically.

8. The method according to claim 1, said method further comprises the steps of obtaining images of the rock face using a visible spectrum camera; binarizing the images of the rock face; and defining a set of 2D candidates to be drilled in the rock face in the light of the binarized images.

9. An automated system for detecting drill holes in a rock face comprising:
a set of LiDAR sensors with at least one LiDAR sensor, wherein the set of LiDAR sensors scans the rock face at a first distance with a first scanning density to obtain a coarse scan point cloud and wherein the set of LiDAR sensors scans the rock face with a second scanning density greater than or equal to the first scanning density to obtain a fine scan point cloud;
at least one processor configured to define a set of candidates to be drilled in the rock face based on the information from the fine scan point cloud; wherein the processor compares the set of candidates to be drilled with a drilling plan executed on the rock face to define a set of drill holes.

10. The system according to claim 9, said system further comprising a ToF camera mounted on robotic means and operatively connected to the processor, wherein the ToF camera scans the rock face around a drill hole and transmits the information so that the processor determines a relative misalignment between the ToF camera and the drill hole.

11. The system according to claim 10, said system further comprising a probe with sensors aligned with the ToF camera that is inserted into each drill hole of the set of actual drill holes to record the internal geometry, drilling direction and/or depth of each drill hole.

12. The system according to claim 9, said system further comprising a visible spectrum camera for obtaining images of the rock face, wherein the processor is further configured to binarize the images of the rock face and define a set of 2D drill hole candidates in the rock face in the light of the binarized images.
